# EUROPEAN PATENT SPECIFICATION

(11) **EP 3 571 255 B1**
(45) Date of publication and mention of the grant of the patent: **15.06.2022**
(21) Application number: 17892319.9
(22) Date of filing: 20.01.2017
(51) Int. Cl.: C09J 7/38, C09J 7/50, C09J 9/02, C08K 9/02, C09J 7/29, C09J 7/30

(54) **ELECTROSTATIC DISCHARGE POLYIMIDE LABEL**
ELEKTROSTATISCHES ENTLADUNGSPOLYIMIDETIKETT
ÉTIQUETTE À BASE DE POLYIMIDE À DÉCHARGE ÉLECTROSTATIQUE

(43) Date of publication of application: 27.11.2019
(73) Proprietor: Avery Dennison Corporation, Glendale, CA 91203 (US)
(72) Inventor: XIE, Shuhui, Glendale, CA 91203 (US); ZHANG, Jun, Glendale, CA 91203 (US); ZHOU, Xinhui, Glendale, CA 91203 (US); ZHU, Yuanhua, Glendale, CA 91203 (US); KONG, Michael, Glendale, CA 91203 (US); YANG, Yurun, Glendale, CA 91203 (US)
(74) Representative: Müller-Boré & Partner Patentanwälte PartG mbB
(86) International application number: PCT/CN2017/071919
(87) International publication number: WO 2018/133031

(56) References cited:
- EP-A2- 0 905 665
- WO-A1-2010/117767
- CN-A- 102 850 536
- CN-U- 204 265 680
- US-A1- 2005 019 519
- US-A1- 2015 179 089
- Milliken & Company: "Electroconductive Powders", , 1 January 2015 (2015-01-01), pages 1-8, XP055717783, Retrieved from the Internet: URL:http://chemical.milliken.com/docs/defa ult-source/default-document-library/zelec- brochure.pdf?sfvrsn=701a744e_2 [retrieved on 2020-07-23]

## Description

The present invention relates generally to electrostatic discharge labels. The labels may include a polyester-amino resin and conductive particles in a topcoat layer of the label, as well as conductive particles in a primer layer and adhesive layer.

Electrostatic discharge (ESD) is caused by the accumulation of charge on the surfaces of insulators, such as plastics. These charges cannot move because there is no path to ground. Thus the charges are referred to as static charges. The static charge on the insulators may be discharged through a conductor, such as the metal leads on a circuit board or the relatively conductive skin of a person. Although the voltage of the ESD may be very low, e.g., 50 V, and may not even generate a spark, these ESDs may destroy, for example, the gate oxide layers inside of an integrated chip, rendering it useless. Even low voltage discharges can destroy a modern integrated circuit.

Electronic components, such as integrated chip circuits, often include labels. These labels, when peeled from the liner before application to the electronic part, can generate static charges that exceed hundreds of thousands of volts. Repositioning of the label also may generate static charge.

One conventional solution to the accumulation of static charge has been to impart conductivity to the label's insulative adhesive by incorporating conductive particles. CN203319919U discloses an antistatic polyimide pressure-sensitive adhesive which comprises a release paper layer and a base material. An adhesive layer is arranged between the release paper layer and the base material layer, with an antistatic coating arranged on the outer surface of the base material layer, allowing static to be effectively let out through the antistatic coating in mimeographing and printing stages. The influence or damage to a precise instrument by the static is thus reduced.

CN205313454U discloses a modified kapton film sticky tape. The upper portion of the backing sheet to the bottom is provided with silicone pressure sensitive film antistatic layer and a thin film. The upper portion of the polyimide film is provided with a protective layer, which is provided with vertically arranged equidistant phosphor strips. The lower portion of the bottom sheet is provided with a scale layer and both sides of the scale layer are provided with graduated scales.

CN204265680U discloses a polyimide tape comprising a base layer, a cotton cloth layer, an organic silicon pressure-sensitive glue layer, an anti-static thin film layer and a polyimide film layer. The layers are sequentially stacked from bottom to top, and the lower side face of the organic silicon pressure-sensitive glue layer is provided with a plurality of non-through glue layer depressions.

US Pat. No. 5,958,573 discloses static dissipative labels which comprise a polyester or polyimide backing film laminated to a conductive primer layer which in turn is laminated to a pressure-sensitive adhesive layer. The primer layer and adhesive layer contain conductive particles, e.g. metals, and the conductive particles in the adhesive layer are arranged such that they span the thickness of the layer.

U.S. Pub. No. 2005/0019519 discloses a heat resistant label stock comprised of an unsupported cast face sheet layer, an adhesive layer and a release liner characterized by a face sheet, an adhesive layer and a release liner. The label stock is generally tamper-evident in that removal destroys or damages the label. In certain embodiments the label stock is electrostatic dissipative.

None of the above-disclosed references, however, provide for cost effective labels with effective electrostatic dissipation properties. In view of the foregoing drawbacks, the need exists for a cost-effective label with low surface resistance and peel off voltage.

The invention relates to a label comprising: (i) a topcoat comprising from 1 to 50 wt.% conductive particles and comprising a polyester-amino resin, wherein the amino resin is a melamine; (ii) a film comprising a material selected from the group consisting of a polyimide, a polyester, a polyetherimide (PEI), a polyethylene naphthalate (PEN), a polyether sulfone (PES), a polysulfone, polymethylpentene (PMP), a polyvinylidene fluoride (PVDF), an ethylene-chlorotrifluoroethylene (ECTFE), or combinations thereof; (iii) a primer layer comprising from 1 to 90 wt.% conductive particles and comprising a polyester-amino resin; and (iv) an adhesive layer. The label may further comprise (v) a releasable liner. The topcoat may comprise from 20 to 70 wt.% polyester-amino resin. The topcoat may further comprise from 10 to 30 wt.% conductive particles. The topcoat may further comprise conductive particles selected from the group consisting of metal particles, metal coated particles, inorganic oxide particles with a conductive shell, carbon particles, graphite particles, conductive polymer particles, and combinations thereof. The topcoat may further comprise conductive titanium dioxide particles. The primer layer comprises a polyester-amino resin. The primer layer comprises conductive particles, such as conductive titanium dioxide particles. In some aspects, the topcoat, primer layer and adhesive layer may comprise conductive particles, and the conductive particles in the adhesive layer may be different than the conductive particles in the topcoat and/or primer layer. In further aspects, the topcoat and primer layer may comprise conductive titanium dioxide particles and the adhesive layer may comprise conductive nickel particles. The film comprises a material selected from the group consisting of a polyimide, a polyester, a polyetherimide (PEI), a polyethylene naphthalate (PEN), a polyether sulfone (PES), a polysulfone, polymethylpentene (PMP), a polyvinylidene fluoride (PVDF), an ethylene-chlorotrifluoroethylene (ECTFE), or combinations thereof. In some aspects, the film may comprise at least one polyimide. The adhesive layer may comprise a pressure sensitive adhesive. The adhesive layer may comprise conductive particles, such as conductive nickel particles. The adhesive layer may comprise from 1 to 20 wt.% conductive particles, based on the total weight of the adhesive layer. The topcoat may have a thickness from 1 to 50 microns. The film may have a thickness from 1 to 400 microns. The primer layer may have a thickness from 0.01 to 50 microns. The adhesive layer may have a thickness from 1 to 200 microns. The label may have a peel-off voltage of less than 50 volts. The topcoat may have a surface resistance of less than 10¹¹ ohms. The primer layer may have a surface resistance of less than 10⁹ ohms. The adhesive layer may have a surface resistance of less than 10⁹ ohms.

In further embodiments, the present invention is directed to a printed circuit board comprising a label as described above, adhered to at least one surface of the printed circuit board.

The invention is described in detail below with reference to the appended drawing.

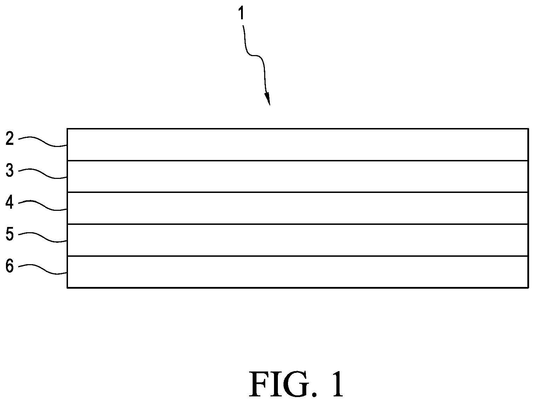

FIG. 1 shows a cross-sectional view of a label in accordance with aspects of the invention.

Labels are often utilized in circuit board applications for labelling or protection. A label having electrostatic dissipation features may be useful in protecting electronic components from electrostatic discharge during application and removal of the label. It has now been discovered that the utilization of particular conductive particles in specific label layers provides for unexpected performance properties of the resultant label. For example, the use of an electrostatic dissipative topcoat comprising a polyester-amino resin and conductive particles in the primer layer has been found to improve electrostatic dissipation. The resultant labels advantageously have a peeling voltage approaching zero and improved ESD functionality on the label surface.

Labels typically comprise an adhesive layer that optionally comprises functional particles. It has further been discovered that when the polyester-amino resin and conductive particles are included in the primer layer as well as the topcoat, the amount or percentage of conductive particles required in the adhesive layer can beneficially be reduced. This reduction in the conductive particles in the adhesive layer results in improved adhesive properties while maintaining low surface resistance and peel-off voltage for the label.

As shown in an exemplary embodiment, e.g., the embodiment of FIG. 1, ESD label 1 contains multiple, e.g., five, basic layers, although the present invention may include additional layers. The layers, in order from top to bottom, include a topcoat 2, a film 3 ("facestock"), a primer layer 4, a pressure-sensitive adhesive 5, and a liner 6. Each layer is described in further detail below.

### Topcoat

From the perspective looking downwardly toward a substrate, in one embodiment, the topcoat layer is, as the name implies, the top layer of the label, and is directly exposed to the surrounding environment. The topcoat layer is configured directly adjacent to the top surface of the film, e.g., the topcoat layer is positioned above the film. The topcoat may serve as a surface be marked with information, such as a barcode or alphanumeric characters, and may be thermal transfer printable. Additionally, the topcoat provides protection for the remaining layers, e.g., the topcoat is designed/selected to resist extreme temperature, solvent, and/or abrasion exposure. In one embodiment, the topcoat has a low surface resistance, e.g., less than 10¹¹ ohms, less than 10¹⁰ ohms, or less than 10⁸ ohms. In terms of ranges, the surface resistance ranges from 10⁵ to 10¹¹ ohms, e.g., from 10⁵ to 10¹⁰ ohms or from 10⁵ to 10⁸ ohms. The low surface resistance provides for faster release speed for the accumulated static energy as well as reduced peel voltage during the manufacturing process. The manufacturing process may include die-cutting and rewinding.

The thickness of the topcoat may vary widely. The topcoat may have a thickness ranging from 1 to 50 microns, e.g., from 5 to 25 microns, or from 10 to 20 microns. In terms of lower limits, the topcoat may have a thickness of at least 1 micron, e.g., at least 5 microns, or at least 10 micros. In terms of upper limits, the topcoat may have a thickness less than 50 microns, e.g., less than 25 microns, or less than 20 microns. The thickness of the topcoat may be chosen based on the desired opacity of the topcoat as well as the desired stiffness of the topcoat.

The topcoat comprises a polyester-amino resin, wherein the amino resin is melamine. In preferred embodiments, the topcoat contains from 20 to 70 wt.% of a polyester-amino resin, based on the total weight of the topcoat, e.g., 25 to 60 wt.% or from 30 to 50 wt.% In terms of upper limits, the topcoat contains up to 70 wt.% of a polyester-amino resin, e.g., up to 60 wt.% or up to 50 wt.%. In terms of lower limits, the topcoat contains at least 20 wt.% polyester-amino resin, e.g., at least 25 wt.%, or at least 30 wt.%. As with the thickness of the topcoat, the amount of resin may also be chosen based on the desired opacity of the topcoat as well as the desired stiffness of the topcoat. In some cases, the ratio of polyester to amino in the resin may range from 2:1 to 1:2, e.g., from 2:1 to 1:1, or from 1.5:1 to 1:1. The inventors have found that by keeping the ratio of polyester to amino within these ranges, the topcoat has the beneficial combination of features of low surface resistance and good thermal transfer printing performance. Generally, introducing conductive materials into the topcoat has a detrimental effect on the thermal printing performance. This detrimental effect is at least partially ameliorated by the use of the polyester-amino resin.

The polyester may vary widely. For example, any suitable hydroxylated polyester may be used in the polyester-amino resin. In some aspects, the polyester is a hydroxylated polyester that comprises hydroxyl group-terminated linear or branched polymers. For example, suitable hydroxylated polyesters may include polymerized copolyester resins such as VYLON 103, VYLON 200, VYLON 220, VYLON 240, VYLON 270, VYLON 300, VYLON 500, VYLON 226, VYLON 670, and VYLON 550 (all commercially available from Toyobo). Additional exemplary hydroxylated polyesters may comprise a range of high-molecular weight and medium-molecular weight copolyesters (e.g., molecular weight ranging from about 2,000 grams per mole to about 20,000 grams per mole). Exemplary commercial products include DYNAPOL L912, DYNAPOL L952, DYNAPOL L206, DYNAPOL L205, DYNAPOL L208, DYNAPOL L210, DYNAPOL L411, DYNAPOL L850, DYNAPOL L658, DYNAPOL LH815, DYNAPOL LH830, DYNAPOL LH828, and DYNAPOL LH744 (all commercially available from Evonik Degussa).

The polyester may be reacted with an amino resin to form the polyester-amino resin, wherein the amino resin is melamine. In some embodiments, the amino is an etherified melamine. Although any etherified melamine may be suitable, in some embodiments, the etherified melamine may comprise melamine compounds substituted with a hydroxymethyl and/or alkoxymethyl group(s). Such compounds are commercially available from a variety of sources with a variety of substituted hydroxymethyl and/or alkoxymethyl groups. For instance, examples of suitable etherified melamine compounds include CYMEL 300, CYMEL 303, CYMEL 325 and CYMEL 725 (all commercially available from Nihon Cytec Industries Inc.), NI ALAC MW-30M, NIKALAC MW-30, NIKALAC MW- 30HM, NIKALAC MW-390, and NIKALAC MW-IOOLM (all commercially available from Sanwa Chemical Co., Ltd.). Each of the foregoing products comprises a methoxymethylated melamine compound. By way of example, additional etherified melamine compounds suitable for certain embodiments of the present invention include methylated methoxymethylated melamine compounds, such as CYMEL 370 and CYMEL 701 (both commercially available from Nihon Cytec Industries Inc.); methoxymethylated butoxymethylated melamine compounds, such as CYMEL 266, CYMEL 285 and CYMEL 212 (ail commercially available from Nihon Cytec Industries Inc.); and methylated methoxymethylated melamine compounds, such as CYMEL 272 and CYMEL 202 (all commercially available from Nihon Cytec Industries Inc.). In addition, methoxymethylated isobutoxymethylated melamine compounds such as CYMEL 238, available from Nihon Cytec Industries Inc., and butoxymethylated melamine compounds, such as MY COAT 506 available from Nihon Cytec Industries Inc., may be used.

The topcoat also comprises conductive particles. The conductive particles are present from 1 to 50 wt.%, based on the total weight of the topcoat, e.g., from 5 to 40 wt.%, or from 10 to 30 wt.%. In terms of upper limits, the topcoat comprises no more than 50 wt.% conductive particles, e.g., no more than 40 wt.%, or no more than 30 wt.%, based on the total weight of the topcoat. In terms of lower limits, the topcoat comprises at least 1 wt.% conductive particles, e.g., at least 5 wt.% or at least 10 wt.%, based on the total weight of the topcoat. The conductive particles are dispersed throughout the topcoat, generally with a high speed dispersion machine followed by filtration through a filter bag. The conductive particles may include at least one of metal particles, metal coated particles, inorganic oxide particles with a conductive shell, carbon particles, graphite particles, and conductive polymer particles. In some aspects, conductive titanium dioxide particles may be used and specifically, needle type conductive titanium dioxide may be used. The addition of the conductive particles, contributes to the surprising benefit of low surface resistance and reduced peel voltage.

In embodiments where metal particles are utilized, the metal particles may include those of silver, gold, copper, nickel, aluminum, iron and steel. When metal-coated particles are employed, the metal-coated particles may include those in which one or more of these or other metals are coated on a core material such as carbon, graphite, polymeric or glass spheres or another metal. The conductive particle for use in a topcoat is chosen based on a number of factors, e.g., loading requirements, the amount of surface resistivity the particle imparts to the topcoat, and cost.

In some aspects, the conductive particles are core-shell particles in which a nonconductive core (usually an oxide or mineral particle) carries a thin outer shell of a conductive material. Examples include the Zelec brand of conductive pigments from E. I. Du Pont de Nemours, Co. in which the core is either a titanium dioxide particle or mica flake and the conductive outer shell is antimony doped tin oxide. Zelec ECP 3410T (which has a titanium dioxide core) is an exemplary conductive particle. Polyaniline as available from Monsanto Co. is representative of the conductive polymers in particle or soluble form.

The topcoat, in accordance with certain embodiments of the present invention, may be applied onto the film (facestock) by any known techniques in the art, such as spray, roll, brush, or other techniques. In some embodiments, the topcoat layer may be coated onto the film as a solvent-based system. The amount of carriers and/or solvent(s) in the topcoat composition may vary depending on the desired coating viscosity. In accordance with certain embodiments, the solvent(s) may comprise any conventional solvent for polyesters and melamine resin systems. For example, such solvents may include ketones of from 3 to 15 carbon atoms (e.g., methyl ethyl ketone or methyl isobutyl ketone), alkylene glycols and/or alkylene glycol alkyl ethers having from 3 to 20 carbon atoms, acetates and their derivatives, ethylene carbonate, and other suitable solvents. Suitable alcohol solvents include mono-alcohols, such as methyl, ethyl, propyl, butyl alcohols, as well as cyclic alcohols such as cyclohexanol. In certain embodiments, most acetate-type solvents may be used, such as n-butyl acetate, n-propyl acetate, and other acetate-type solvents. In accordance with certain embodiments, a portion of the solvent system may include water is so desired. In other embodiments, however, the solvent system may be devoid of water.

### Film

As noted above, the labels comprise at least one film that is directly adjacent to the topcoat. The film has top and bottom surfaces. From the perspective looking downwardly toward the substrate, the film may be configured beneath the topcoat, e.g., the top surface of the film is adjacent the topcoat.

The film may vary widely. In some embodiments, the film may comprise any material that exhibits good mechanical strength and heat resistance. Films comprise at least one of a polyimide, a polyester, a polyetherimide (PEI), a polyethylene naphthalate (PEN), a polyether sulfone (PES), a polysulfone, polymethylpentene (PMP), a polyvinylidene fluoride (PVDF), an ethylene-chlorotrifluoroethylene (ECTFE), or combinations thereof. In certain embodiments, especially when the label may be used at high temperatures, the film comprises at least one polyimide

Exemplary films made of polyimide include Kapton^{®}, available from DuPont, and Apical@, available from Kaneka Texas Corporation, Exemplary films made of polyester include Mylar^{©}, available from DuPont, and 2600 polyethylene terephthalate film, available from American Hoechst. Other commercially available films include Tempalux^{™} (PEI), available from Westlake Plastics Company; Superio-UT^{™} (PEI), available from Mitsubishi Plastics, Kaladex^{™}; (PEN) and Teonex (PEN), both available from DuPont.

The films according to certain embodiments of the present invention may comprise a thickness ranging from 1 to 400 microns, e.g., from 10 to 300 microns, from 25 to 200 microns, or from 50 to 150 microns, and other ranges in the foregoing amounts. In terms of lower limits, the films may have a thickness of at least 1 micron, e.g., at least 10 microns, at least 25, or at least 50 micros. In terms of upper limits, the films may have a thickness less than 400 microns, e.g., less than 300 microns, less than 200 microns, or less than 150 microns.

### Primer Layer

The primer layer may be directly adjacent to the film on the opposite surface of the film from the topcoat, e.g., the film may be configured between the topcoat and the primer layer. The primer layer comprises a polyester-amino resin and conductive particles. The polyester-amino resin and conductive particles employed in the primer layer may be as described above for the topcoat, though the final compositions of the primer layer and the topcoat may be different. Also, the optional additives described for the topcoat may be utilized in the primer layer. In some embodiments, the composition of the topcoat is different from the composition of the primer layer. For example, the primer layer may comprise the same polyester-amino resin as the topcoat, the same conductive particles, but different additives as described herein. In some cases, the composition of the topcoat may be the same as the composition of the primer layer. In other cases, the primer layer may comprise a greater percentage of conductive particles than the topcoat since there is no thermal transfer printing on the primer layer. The conductive particles are present from 1 to 90 wt.%, based on the total weight of the topcoat, e.g., from 5 to 80 wt.%, or from 10 to 70 wt.%. In terms of upper limits, the topcoat comprises no more than 90 wt.% conductive particles, e.g., no more than 80 wt.%, or no more than 70 wt.%, based on the total weight of the topcoat. In terms of lower limits, the topcoat comprises at least 1 wt.% conductive particles, e.g., at least 5 wt.% or at least 10 wt.%, based on the total weight of the topcoat.

In preferred embodiments, the conductive particles in the primer layer include at least one of least one of metal particles, metal coated particles, inorganic oxide particles with a conductive shell, carbon particles, graphite particles, and conductive polymer particles. In some aspects, conductive titanium dioxide particles may be used and specifically, needle type conductive titanium dioxide may be used in both the topcoat and primer layer. The primer layer may have a surface resistance of less than 10⁹ ohms, e.g., less than 10⁸ ohms, or less than 10⁷ ohms. Without being bound by theory, by including conductive particles in the primer layer, the ESD performance on peel off voltage is surprisingly improved while the adhesion of the label is not compromised. The label may give a peel-off voltage of less than 50 volts, e.g., less than 40 volts, less than 30 volts, or less than 25 volts.

The primer layer may be coated onto the film by gravure. After curing at a temperature from about 150 to 180°C, the primer layer is affixed to the film. Additionally, when crosslinker is included in the primer layer, the hydroxyl group on the film reacts with the crosslinker and thus the primer layer is chemically bonded to the film.

The thickness of the primer layer may range from 0.01 to 50 microns, e.g., from 0.1 to 25 microns, or from 0.5 to 10 microns. In terms of lower limits, the primer layer may have a thickness of at least 0.01 micron, e.g., at least 0.1 microns, or at least 0.5 micros. In terms of upper limits, the primer layer may have a thickness less than 50 microns, e.g., less than 25 microns, or less than 10 microns.

### Adhesive Layer

The adhesive layer, according to certain embodiments of the present invention, may comprise any adhesive that is effective in binding the label to an external surface of the substrate to which the label may be affixed.

As noted above, the adhesive layer may also comprise conductive particles as described for the topcoat. The conductive particles in the adhesive layer may be the same as in the topcoat and/or primer layer, or may be different. For example, the topcoat and primer could contain the same conductive particles, such as conductive titanium dioxide, while the adhesive layer may contain different conductive particles, such as nickel particles. In further embodiments, the adhesive layer contains the same conductive particles as the topcoat and primer layer. In even further embodiments, the adhesive layer contains the same conductive particles as the topcoat, while the primer contains different conductive particles, or the adhesive layer contains the same conductive particles as the primer layer, and the topcoat has different conductive particles. Preferably, the conductive particles of the adhesive layer include at least one of metal particles, metal coated particles, inorganic oxide particles with a conductive shell, carbon particles, graphite particles, and conductive polymer particles. In some aspects, conductive nickel particles are used. By including conductive particles in the topcoat and primer layer, the amount of conductive particles in the adhesive layer may be reduced. The resultant labels advantageously demonstrate beneficial performance properties, e.g., improved adhesion, ESD functionality and/or peeling voltage.

The conductive particles in the adhesive may be present from 1 to 20 wt.%, based on the total weight of the adhesive layer, e.g., from 2 to 15 wt.% or from 2 to 10 wt.%. In terms of lower limits, the adhesive layer comprises at least 1 wt.% conductive particles, e.g., at least 2 wt.% or at least 5 wt.%, based on the total weight of the adhesive layer. In terms of upper limits, the adhesive layer comprises no more than 20 wt.% conductive particles, e.g., no more than 15 wt.% or no more than 10 wt.%, based on the total weight of the adhesive layer. As explained herein, by reducing the weight percent of conductive particles in the adhesive layer as compared to conventional labels, the label has improved heat resistance and peel strength. The adhesive layer may contain less than 75% of the weight percentage of conductive particles in a conventional label, e.g., less than 50%, less than 25%, or less than 10%.

In some embodiments, the adhesive exhibits good heat resistance and peel strength, e.g., a peel strength of at least 0.35kN/m on a steel panel, e.g., at least 0.37kN/m or at least 0.39kN/m. In some aspects, the adhesive may be a pressure sensitive adhesive. Importantly, when the aforementioned topcoat and/or primer layer compositions are employed, the amount of conductive particles in the adhesive layer can be reduced, which results in improved adhesiveness while maintaining low surface resistance and peel-off voltage for the label. Thus, the adhesive layer may have a lower conductive particle content, while still providing suitable performance.

The adhesive layer may have a thickness from 1 to 200 microns, e.g., from 5 to 100 microns, or from 10 to 50 microns. In terms of lower limits, the adhesive layer may have a thickness of at least 1 micron, e.g., at least 5 microns, or at least 10 micros. In terms of upper limits, the primer layer may have a thickness less than 200 microns, e.g., less than 100 microns, or less than 50 microns.

In some embodiments, the adhesive may exhibit heat resistance at temperatures of up to 200°C, 225°C, 250°C, 260°C, or 270°C. In some embodiments, the adhesive also may exhibit cohesive strength and high shear resistance. The adhesive layer may have a surface resistance of less than 10⁹ ohms, e.g., less than 1*10⁹ ohms, or less than 5*10⁹ ohms.

An aggressive pressure sensitive adhesive may be used, such as one of the high-strength or rubber- modified acrylic pressure sensitive adhesives, such as Duro-Tak^{®} 80-115 A available from National Starch and Chemical Co. or Aroset^{™} 1860-Z-45 available from Ashland Specialty Chemical Company. Suitable pressure sensitive adhesives may include, for example, copolymers of alkyl acrylates that have a straight chain of from 4 to 12 carbon atoms and a minor proportion of a highly polar copolymerizable monomer such as acrylic acid. These adhesives are more fully described in U.S. Pat. Re. 24,906 and U.S. Pat. No. 2,973,286, Alternative pressure sensitive adhesives include ultraviolet curable pressure sensitive adhesives, such as Duro-Tak 4000, which is available from National Starch and Chemical Co.

The adhesive layer may also contain additives as described herein, including antioxidants and cross-linkers, in amounts of less than 5 wt.% based on the total weight of the adhesive layer, e.g., less than 4 wt.% or less than 3 wt.%.

### Releasable Liner

In accordance with certain embodiments of the present invention, the labels may comprise a releasable liner. The releasable liner may be positioned directly adjacent to the adhesive layer, on the opposite side of the adhesive layer from the primer layer. In this regard, the releasable liner may protect the adhesive layer before the label is applied (or intended to be applied) to an object or facestock, such as during manufacture, printing, shipping, storage, and at other times. Any suitable material for a releasable liner may be used. Typical and commercially available releasable liners, which can be suitable for embodiments of the present invention, can include a siliconetreated release paper or film, such as those available from Loparex, including products such as 1011, 22533 and 1 1404, CP Films, and Akrosil^{™}.

### Additives

The topcoat, primer, and/or adhesive layer may optionally include one or more fillers and/or additives. Such fillers and/or additives, for example, may be incorporated into the topcoat layer in conventional quantities using conventional equipment and techniques. For example, representative fillers can include tale, calcium carbonate, organo-clay, glass fibers, marble dust, cement dust, feldspar, silica or glass, fumed silica, silicates, alumina, various phosphorus compounds, ammonium bromide, titanium dioxide, antimony trioxide, antimony trioxide, zinc oxide, zinc borate, barium sulfate, silicones, aluminum silicate, calcium silicate, glass microspheres, chalk, mica, clays, wollastonite, ammonium octamolybdate, intumescent compounds and mixtures of two or more of these materials. The fillers may also carry or contain various surface coatings or treatments, such as silanes, fatty acids, and the like. Still other fillers can include flame retardants, such as the halogenated organic compounds. In certain embodiments, the topcoat layer may include one or more thermoplastic elastomers that are compatible with the other constituents of the layer, such as etherified melamine, hydroxylated polyester, polyester-melamine, and other suitable elastomers.

The topcoat, primer, and/or adhesive layer can also include pigment dispersants, such as Nuosperse^{®} 657 available from Elementis Specialties. In accordance with certain embodiments, the topcoat layer may also include carbon pigments, such as carbon black, ivory black, or the like, and/or one or more of a variety of other pigments, such as copper pigments (e.g., phthalocyanine dyes such as phthalocyanine blue), cadmium pigments (e.g., cadmium yellow), chromium pigments (e.g., chrome yellow), cobalt pigments (e.g., cobalt blue), iron oxide pigments (e.g., oxide red), and any other suitable pigments. Any colorants, pigments, and pigment dispersant are suitable to the extent that they do not interfere with desired loadings and/or physical or mechanical properties of the topcoat.

In accordance with certain embodiments, the topcoat, primer, and/or adhesive layer can also include one or more flow and/or leveling agent to mitigate the occurrence of any surface defects (e.g., formation of pinholes, cratering, peeling, scarring, blistering, air bubbles, etc.). Suitable flow and/or leveling agents utilized are those that do not interfere with desired loadings and/or physical or mechanical properties of the topcoat. In certain embodiments, for instance, several commercially available flow and/or leveling agents may be utilized, including, for example BYK-392 (solution of a polyacrylate) from BYK Additives & Instruments; BY -310 (solution of a polyester modified polydimethylsiloxane) from BYK Additives & Instruments; EFKA 3277 (fluorocafbon modified polyacrylate) from BASF, and/or EFKA 3740 (polyacrylate) from BASF.

The topcoat, primer, and/or adhesive layer may also include one or more defoaming agents. A defoaming agent generally reduces or mitigates the formation of foaming in the topcoat layer when deposited or generally handled or transferred from one location to another. Generally, any defoaming agent that does not interfere in some embodiments, desired loadings and/or physical or mechanical properties of the topcoat layer may be used. For instance, the defoaming agent may be mineral-based, silicone-based, or non-silicone-based.

In accordance with some embodiments, the topcoat, primer, and/or adhesive layer may also include one or more antioxidants. Any suitable antioxidants for a particular embodiment may be used. In some embodiments, antioxidants may be selected that exhibit good heat resistance and mitigate the discoloration of polymericbased articles/coatings. Exemplary antioxidants suitable for use according to certain embodiments of the present invention include, but not limited to, CHINOX 626, CHINOX 62S (organophophite antioxidant), CHINOX 245 (steric hindered phenolic antioxidant), and CHINOX 30N (blend of hindered phenolic antioxidants), each of which is commercially available from Double Bond Chemical Ind., Co., Ltd.

The topcoat, primer, and/or adhesive layer may also include one or more matting agents which may facilitate formation of a smooth layer. Any suitable matting agent for a particular embodiment may be utilized. In some embodiments, the matting agents may have a small particle size. For example, in some embodiments, the matting agents may have a particle size of less than 10 microns on average or less than 5 microns on average, such as modified or surface treated silica. The silica may be treated a variety of organic polymers depending on the particular resin system employed in the topcoat layer. In certain embodiments, the matting agent may include untreated silicon dioxide.

According to certain embodiments of the present invention, suitable catalyst may also be used. For instance, the constituents of the topcoat may include one or more acid catalysts, such as para-toluene sulfonic acid (PTSA) or methyl sulfonic acid (MSA). Useful acid catalysts may include, by way of example, boric acid, phosphoric acid, sulfate acid, hypochlondes, oxalic acid and ammonium salts thereof, sodium or barium ethyl sulfates, sulfonic acids, and similar acid catalysts. Other useful catalysts, according to certain embodiments, may include dodecyl benzene sulfonic acid (DDBSA), amine blocked alkane sulfonic acid (MCAT 12195), amine blocked dodecyl para-toluene sulfonic acid (B YK 460), and amine blocked dodecyl benezene sulfonic acid (Nacure 5543).

The present invention will be better understood in view of the following nonlimiting examples.

### Examples

### Example 1

A label according to the present invention was prepared as follows. The label contained, in order from top to bottom, a topcoat, a polyimide film, a primer layer, an adhesive layer, and a liner. The topcoat was formed from a polyester-melamine resin, had a thickness of 10 microns and contained 20 wt.% of conductive TiO₂. The surface resistance of the topcoat was from 10⁷ to 10⁸ ohms. The primer layer was also formed from a polyester-melamine resin, had a thickness of 1-2 microns and contained 70 wt.% conductive TiO₂. The surface resistance of the primer layer was from 10⁷ to 10⁸ ohms. The adhesive layer contained a pressure-sensitive adhesive, had a thickness of 27 microns and contained 2 wt.% nickel. The surface resistance of the adhesive layer was from 10⁷ to 10⁸ ohms. The peel strength of the adhesive layer was greater than 0.35kN/m as measured by peeling from a steel panel.

### Example 2

A label was prepared as in Example 1, except that the primer layer contained 20 wt.% conductive TiO₂. The surface resistance of the primer layer was from 10⁹ to 10¹⁰ ohms. The adhesive layer had a thickness of 27 microns and contained 2 wt.% nickel. The surface resistance of the adhesive layer was from 10⁹ to 10¹⁰ ohms. The peel strength of the adhesive layer was greater than 0.35kN/m as measured by peeling from a steel panel

### Comparative Example A

A label was prepared as above, except that the primer layer was omitted and the adhesive layer was adjusted to contain about 60 wt.% conductive nickel powder. The surface resistance of the adhesive layer was greater than 10¹² ohms and the adhesive performance was reduced to almost zero, as compared to Example 1.

### Comparative Example B

A label was prepared as in Example 1, except that the topcoat contained 70 wt.% of conductive TiO₂. The surface resistance of the topcoat was from 10⁶ to 10⁷ ohms but the TT-printing performance was very poor.

### Comparative Example C

A label was prepared as in Example 1, except that the adhesive layer contained 20 wt.% nickel. The surface resistance of the adhesive layer was from 10⁷ to 10⁸ ohms. The peel strength of the adhesive layer was less than 0.2kN/m as measured by peeling from a steel panel.

## Claims

1. A label comprising:
(i) a topcoat comprising from 1 to 50 wt.% conductive particles and comprising a polyester-amino resin, wherein the amino resin is a melamine;
(ii) a film comprising a material selected from the group consisting of a polyimide, a polyester, a polyetherimide (PEI), a polyethylene naphthalate (PEN), a polyether sulfone (PES), a polysulfone, polymethylpentene (PMP), a polyvinylidene fluoride (PVDF), an ethylene-chlorotrifluoroethylene (ECTFE), or combinations thereof;
(iii) a primer layer comprising from 1 to 90 wt.% conductive particles and comprising a polyester-amino resin;
(iv) an adhesive layer, and
optionally
(v) a releasable liner.

2. The label according to claim 1, wherein the topcoat comprises from 20 to 70 wt.% polyester-amino resin.

3. The label according to any of the preceding claims, wherein the topcoat comprises from 10 to 30 wt.% conductive particles.

4. The label according to any of the preceding claims, wherein the topcoat comprises conductive particles selected from the group consisting of metal particles, metal coated particles, inorganic oxide particles with a conductive shell, carbon particles, graphite particles, conductive polymer particles, and combinations thereof.

5. The label according to any of the preceding claims, wherein the topcoat, primer layer and adhesive layer comprise conductive particles, and wherein the conductive particles in the adhesive layer are different than the conductive particles in the topcoat and/or primer layer.

6. The label according to any of the preceding claims, wherein the topcoat and primer layer comprises conductive titanium dioxide particles and the adhesive layer comprises conductive nickel particles.

7. The label according to any of the preceding claims, wherein the adhesive layer comprises from 1 to 20 wt.% conductive particles, based on the total weight of the adhesive layer.

8. The label according to any of the preceding claims, wherein the topcoat has a thickness from 1 to 50 microns.

9. The label according to any of the preceding claims, wherein the polyolefin film has a thickness from 1 to 400 microns.

10. The label according to any of the preceding claims, wherein the primer layer has a thickness from 0.01 to 50 microns.

11. The label according to any of the preceding claims, wherein the adhesive layer has a thickness from 1 to 200 microns.

12. A printed circuit board comprising a label according to any of the preceding claims, adhered to at least one surface of the printed circuit board.

## Patentansprüche

1. Etikett, umfassend:
(i) eine Deckschicht, die 1 bis 50 Gew.-% leitfähige Teilchen umfasst und ein Polyester-Aminoharz umfasst, wobei das Aminoharz ein Melamin ist;
(ii) einen Film, umfassend ein Material, ausgewählt aus der Gruppe, bestehend aus einem Polyimid, einem Polyester, einem Polyetherimid (EPI), einem Polyethylennaphthalat (PEN), einem Polyethersulfon (PES), einem Polysulfon, Polymethylpenten (PMP), einem Polyvinylfluorid (PVDF), einem Ethylenchlortrifluorethylen (ECTFE) oder Kombinationen davon;
(iii) eine Grundierungsschicht, die 1 bis 90 Gew.-% leitfähige Teilchen umfasst und ein Polyester-Aminoharz umfasst;
(iv) eine Klebeschicht, und
gegebenenfalls
(v) eine lösbare Trennschicht.

2. Etikett nach Anspruch 1, wobei die Deckschicht 20 bis 70 Gew.-% Polyester-Aminoharz umfasst.

3. Etikett nach einem der vorstehenden Ansprüche, wobei die Deckschicht 10 bis 30 Gew.-% leitfähige Teilchen umfasst.

4. Etikett nach einem der vorstehenden Ansprüche, wobei die Deckschicht leitfähige Teilchen, ausgewählt aus der Gruppe, bestehend aus Metallteilchen, metallbeschichteten Teilchen, anorganischen Oxidteilchen mit einer leitfähigen Hülle, Carbonteilchen, Graphitteilchen, leitfähigen Polymerteilchen und Kombinationen

5. Etikett nach einem der vorstehenden Ansprüche, wobei die Deckschicht, Grundierungsschicht und Klebeschicht leitfähige Teilchen umfassen, und wobei die leitfähigen Teilchen in der Klebeschicht anders als die leitfähigen Teilchen in der Deckschicht und/oder Grundierungsschicht sind.

6. Etikett nach einem der vorstehenden Ansprüche, wobei die Deckschicht und Grundierungsschicht leitfähige Titanoxidteilchen umfassen und die Klebeschicht leitfähige Nickelteilchen umfasst.

7. Etikett nach einem der vorstehenden Ansprüche, wobei die Klebeschicht 1 bis 20 Gew.-% leitfähige Teilchen, basierend auf dem Gesamtgewicht der Klebeschicht, umfasst.

8. Etikett nach einem der vorstehenden Ansprüche, wobei die Deckschicht eine Dicke von 1 bis 50 Mikrometer aufweist.

9. Etikett nach einem der vorstehenden Ansprüche, wobei der Polyolefinfilm eine Dicke von 1 bis 400 Mikrometer aufweist.

10. Etikett nach einem der vorstehenden Ansprüche, wobei die Grundierungsschicht eine Dicke von 0,01 bis 50 Mikrometer aufweist.

11. Etikett nach einem der vorstehenden Ansprüche, wobei die Klebeschicht eine Dicke von 1 bis 200 Mikrometer aufweist.

12. Leiterplatte, umfassend ein Etikett nach einem der vorstehenden Ansprüche, welches an mindestens eine Oberfläche der Leiterplatte geklebt ist.

## Revendications

1. Étiquette comprenant :
(i) une couche de finition comprenant 1 à 50 % en poids de particules conductrices et comprenant une résine de polyester-aminoplaste, dans laquelle la résine aminoplaste est une mélaminé ;
(ii) un film comprenant un matériau sélectionné parmi le groupe constitué d'un polyimide, d'un polyester, d'un polyétherimide (PEI), d'un polyéthylène naphtalate (PEN), d'une polyéthersulfone (PES), d'une polysulfone, d'un polyméthylpentène (PMP), d'un fluorure de polyvinylidène (PVDF), d'un éthylène-chlorotrifluoroéthylène (ECTFE), ou de combinaisons de ceux-ci ;
(iii) une couche primaire comprenant 1 à 90 % en poids de particules conductrices et comprenant une résine de polyester-aminoplaste ;
(iv) une couche adhésive, et
en option
(v) une doublure décollable.

2. Étiquette selon la revendication 1, dans laquelle la couche de finition comprend 20 à 70 % en poids de résine de polyester-aminoplaste.

3. Étiquette selon l'une quelconque des revendications précédentes, dans laquelle la couche de finition comprend 10 à 30 % en poids de particules conductrices.

4. Étiquette selon l'une quelconque des revendications précédentes, dans laquelle la couche de finition comprend des particules conductrices sélectionnées parmi le groupe constitué de particules métalliques, de particules enrobées de métal, de particules d'oxyde inorganique avec une coque conductrice, de particules de carbone, de particules de graphite, de particules de polymère conductrices, et de combinaisons de celles-ci.

5. Étiquette selon l'une quelconque des revendications précédentes, dans laquelle les couche de finition, couche primaire et couche adhésive comprennent des particules conductrices, et dans laquelle les particules conductrices dans la couche adhésive sont différentes des particules conductrices dans la couche de finition et/ou couche primaire.

6. Étiquette selon l'une quelconque des revendications précédentes, dans laquelle les couche de finition et couche primaire comprennent des particules de dioxyde de titane et la couche adhésive comprend des particules de nickel conductrices.

7. Étiquette selon l'une quelconque des revendications précédentes, dans laquelle la couche adhésive comprend 1 à 20 % en poids de particules conductrices, basés sur le poids total de la couche adhésive.

8. Étiquette selon l'une quelconque des revendications précédentes, dans laquelle la couche de finition a une épaisseur de 1 à 50 microns.

9. Étiquette selon l'une quelconque des revendications précédentes, dans laquelle le film de polyoléfine a une épaisseur de 1 à 400 microns.

10. Étiquette selon l'une quelconque des revendications précédentes, dans laquelle la couche primaire a une épaisseur de 0,01 à 50 microns.

11. Étiquette selon l'une quelconque des revendications précédentes, dans laquelle la couche adhésive a une épaisseur de 1 à 200 microns.

12. Carte de circuit imprimé comprenant une étiquette selon l'une quelconque des revendications précédentes, collée à au moins une surface de la carte de circuit imprimé.
